# EUROPÄISCHE PATENTSCHRIFT

(11) **EP 2 369 212 B1**
(45) Veröffentlichungstag und Bekanntmachung des Hinweises auf die Patenterteilung: **10.06.2015**
(21) Anmeldenummer: 11157179.0
(22) Anmeldetag: 07.03.2011
(51) Int. Cl.: F16L 27/08, F16L 13/14

(54) **Verbindungsanordnung**
Connection assembly
Dispositif de raccordement

(30) Priorität: 22.03.2010 DE 202010000431 U
(43) Veröffentlichungstag der Anmeldung: 28.09.2011
(73) Patentinhaber: Salzgitter Mannesmann Stahlhandel GmbH, 40475 Düsseldorf (DE)
(72) Erfinder: Meister, Steffen, 36132 Eiterfeld (DE)
(74) Vertreter: Stoffregen, Hans-Herbert

(56) Entgegenhaltungen:
- DE-U1- 29 518 980
- FR-A- 1 423 846
- FR-A1- 2 510 227
- US-A- 1 936 669
- US-B1- 6 447 017

## Beschreibung

Die Erfindung bezieht sich auf eine Verbindungsanordnung zwischen einem aus Stahl bestehenden Abschlussstück eines von einer Ummantelung umgebenen Falten- oder Wellrohrs und einem hülsenförmigen aus Stahl bestehenden Anschlusselement, das das Abschlussstück endseitig umgibt und mit diesem verbunden ist, wobei im Überlappungsbereich von dem Abschlussstück und dem Anschlusselement zwischen diesen eine radial umlaufende Dichtung, wie O-Ring, verläuft, wobei das Abschlussstück eine äußere zweite Stufe aufweist, das Anschlusselement einen rohrförmigen Endabschnitt mit einer entgegengesetzt zu der zweiten Stufe verlaufenden inneren ersten Stufe und endseitig einen nach innen gerichteten Vorsprung aufweist, der bei zusammengesetztem Abschlussstück und Anschlusselement zu deren axialen Sicherung mit einem von dem Abschlussstück ausgehenden Anschlag wechselwirkt, wobei das Anschlusselement zwischen der ersten Stufe und dem Vorsprung geschwächt ist.

Eine entsprechende Verbindungsanordnung ist der EP-A-1 368 586 (WO-A-02/070071) zu entnehmen. Abschlussstück und Anschlusselement sind dabei über einen Sprengring verbunden.

Nach der GB-A-926 215 werden aus Kunststoff bestehende Rohre über aus Kunststoff bestehende Anschluss- und Abschlussstücke verbunden, die ihrerseits über einen Sprengring gesichert sind.

Die DE-A-197 23 410 bezieht sich auf eine Anordnung zum Befestigen eines Wellrohrs auf einem ein Tannenbaumprofil aufweisenden Stutzen.

Gegenstand der DE-A-103 22 972 ist ein Verbindungselement zum Transport von Fluiden über einen Wellschlauch, der endseitig von einer Kupplung umgeben ist. Zum Fixieren der Kupplung wird zunächst auf den Schlauch ein Spreizring geschoben, sodann ein Dichtring, der stirnseitig an dem Spreizring anliegt, und sodann die Kupplung, die eine umlaufende Nut aufweist, in die ein Vorsprung des Spreizrings zum Verrasten der Kupplung eingreift.

Eine Kraftfahrzeugspritzwasserleitungs-Verbindungsanordnung ist der DE-A-102 12 402 zu entnehmen. Hierzu weist ein Wellrohr einen Anschlussstutzen auf, in den eine Muffe einsetzbar ist. Die überlappenden Bereiche von Anschlussstutzen und Muffe sind geometrisch korrespondierend angepasst, um eine Rastverbindung zu ermöglichen.

Aus der US-B-6 447 017 ist eine gattungsgemäße Rohrkupplung bekannt, bei der ein Anschlussfitting mit einem Anschweißstück verbunden ist. Um eine Drehbarkeit zu unterbinden, wird ein in eine Nut des Anschweißstücks eingreifender Vorsprung des Anschlussfittings mittels einer von dem Anschweißstück ausgehenden Mutter fixiert.

Eine Rohrkupplung nach der FR-A-2 510 227 weist einen von einem Anschlussstück abscherbaren Ring auf, mittels dessen bei zusammengesetzter Kupplung ein Abschnitt des Anschlussstückes in einer Nut des anderen Anschlussstücks fixiert wird.

Der DE-U-295 18 980 ist eine Gleitlager-Drehverbindung zu entnehmen, bei der eine Abdichtung zwischen einem Festkörper und einem Drehzapfen, die gegeneinander über eine in einer in der Umfangswandung des Drehzapfens ausgebildeten Nut angeordneten Dichtung abgedichtet sind.

Der vorliegenden Erfindung liegt die Aufgabe zugrunde, eine Verbindungsanordnung der eingangs genannten Art so weiterzubilden, dass mit konstruktiv einfachen Maßnahmen eine Verbindung erfolgen kann, wobei nach Zusammenfügen von Abschlussstück und Anschlusselement mit einfachen Maßnahmen eine Unlösbarkeit gewährleistet sein soll.

Zur Lösung der Aufgabe sieht die Erfindung im Wesentlichen vor, dass bei zusammengesetztem Abschlussstück und Anschlusselement diese drehbar verbunden sind und die erste und die zweite Stufe einen Zwischenraum begrenzen, in dem die Dichtung verläuft, dass zu beiden Seiten sowohl der ersten als auch der zweiten Stufe angrenzende Bereiche parallel zueinander und parallel zur Längsachse des Abschlussstücks verlaufen und eine radiale Führung beim Drehen bilden, dass die Schwächung des Anschlusselements durch eine umlaufende Innennut bei gleichbleibendem Außendurchmesser des Anschlusselements zwischen der ersten Stufe und dem Vorsprung gebildet wird, wobei das Anschlusselement zwischen der ersten Stufe und dem Vorsprung derart geschwächt ist, dass bei radial auf den Vorsprung einwirkenden Kräften in Richtung der Außenfläche des Abschlussstücks und hierdurch bedingtes bleibendes Verstellen des Vorsprungs bei gleichzeitigem Hintergreifen des Anschlags eine die radiale Führung beeinflussende Verformung des Anschlusselementes unterbleibt, dass der mit dem Vorsprung wechselwirkende Anschlag durch eine umlaufende dritte Stufe des Anschlussstücks gebildet ist und sowohl die dritte Stufe als auch der mit dieser wechselwirkende Bereich des Vorsprungs in Längsschnitt betrachtet durch Geraden begrenzt sind, die einen rechten Winkel einschließen und unstetig oder im Wesentlichen unstetig ineinander übergehen, und dass xial verlaufende Innenfläche des Vorsprungs unter Einhaltung eines Spalts zur zugewandten Außenfläche des Abschlussstücks verläuft.

Erfindungsgemäß wird eine Verbindungsanordnung zur Verfügung gestellt, bei der Abschlussstück und Anschlusselement im gewünschten Umfang zueinander verdrehbar sind, eine Maßnahme, die insbesondere bei einem Einsatz für Sprinklerrohre wichtig ist. Gleichzeitig erfolgt eine formschlüssige Verbindung in einem Umfang, dass ein unkontrolliertes Lösen nicht erfolgen kann.

Durch die parallel zueinander verlaufenden Bereiche, die an den zueinander ausgerichteten Stufen angrenzen bzw. von diesen ausgehen, zwischen denen die Dichtung wie O-Ring-Dichtung verläuft, ist eine einwandfreie radiale Führung gegeben mit der Folge, dass ein problemloses Drehen von Abschlussstück zum Anschlusselement erfolgen kann.

Durch das Wechselwirken des im endseitigen Bereich des Anschlusselements verlaufenden nach innen gerichteten Vorsprungs mit dem von dem Abschlussstück ausgehenden Anschlag ist dann eine formschlüssige Verbindung in axialer Richtung gegeben, wenn das den Vorsprung aufweisende Ende des Anschlusselements radial verpresst wird, so dass ein unkontrolliertes Lösen nicht erfolgen kann. Der Vorsprung hintergreift den durch einen senkrecht zur Längsachse des Abschlusselements verlaufenden Abschnitt einer dritten Stufe gebildeten Anschlag. Das Verpressen kann mit einem Werkzeug wie Schlauchpresse erfolgen, wie dieses für die Montage von Hydraulikschläuchen Verwendung findet.

Ungeachtet der Krafteinwirkung in radialer Richtung wird die radiale Führung nicht beeinträchtigt, da zwischen dieser und dem zu verpressenden Endbereich des Anschlusselements dessen Material geschwächt ist. Dieser Bereich dient als Verformungszone, so dass der Bereich, der den O-Ring umgibt und die radiale Führung sicherstellt, nicht verformt werden kann.

Zur Materialschwächung ist insbesondere vorgesehen, dass der rohrförmige Endabschnitt des Anschlusselements beabstandet zu seinem freien Ende, also dem Vorsprung, eine umlaufende Innennut aufweist. Somit wird eine einfache Herstellung bzw. Ausbildung der Materialschwächung ermöglicht.

In Längsrichtung des Anschlusselements betrachtet grenzt innenseitig an der Innennut einer der die radiale Führung bildenden Bereiche an, der in die erste Stufe übergeht. Außenseitig angrenzender Abschnitt bildet sodann den nach innen gerichteten Vorsprung. Dieser wirkt mit dem Anschlag des Abschlussstückes bei zusammengesetzten Bauteilen zusammen, wobei der Anschlag durch die umlaufende dritte Stufe gebildet werden kann.

Um bereits durch geringe radiale Verformungen des Anschlusselements im Bereich des Vorsprungs eine sichere Verbindung in axialer Richtung zu gewährleisten, sind die wechselwirkenden Kanten von Vorsprung und Stufe nicht abgerundet, also angefast, sondern quasi scharfkantig ausgebildet. Somit reicht bereits ein geringer Überlappungsbereich von Vorsprung und dritter Stufe bzw. Anschlag aus, um die gewünschte axiale Sicherung zu gewährleisten.

Daher kann die Geometrie von Vorsprung und dritter Stufe dahingehend charakterisiert werden, dass sowohl die dritte Stufe als auch der mit dieser wechselwirkende Bereich des Vorsprungs in Längsschnitt betrachtet durch Geraden begrenzt sind, die einen rechten Winkel einschließen und unstetig oder im Wesentlichen unstetig ineinander übergehen. Die Geraden verlaufen parallel bzw. senkrecht zur Längsachse des Abschlussstücks und Anschlusselements.

Um die gewünschte Verdrehbarkeit sicherzustellen, sieht die Erfindung des Weiteren vor, dass bei zusammengesetztem Abschlussstück und Anschlusselement bzw. radial verformtem bzw. verpresstem Anschlusselement axial verlaufende Innenfläche des Vorsprungs unter Einhaltung eines Spalts zur zugewandten Außenfläche des Abschlussstücks verläuft, wobei die Höhe des Spalts, also der Abstand senkrecht zur Längsachse des Abschlussstücks, zwischen mit 0,2 mm und 0,5 mm liegen sollte.

Ein Überlappungsbereich zwischen Vorsprung und Anschlag in radialer Richtung betrachtet zwischen 1,0 mm und 1,5 mm reicht aus, um die gewünschte sichere Verbindung zu gewährleisten.

Erwähntermaßen ist die erfindungsgemäße Verbindungsanordnung insbesondere für Sprinklerrohre bestimmt. Abschlussstück und Schlauch sollten aus Stahl, insbesondere aus Edelstahl, genauso bestehen wie die Ummantelung des Schlauchs sowie die Führungshülse, die den Schlauch und dessen Ummantelung im Bereich des auch als Anschweißstück zu bezeichnenden Abschlussstücks umgibt, die mit dem Anschweißstück verschweißt ist.

Das Anschlusselement, das auch als Anschlussfitting zu bezeichnen ist, weist vorzugsweise ein Gewindeanschluss auf und besteht aus Stahl und kann beschichtet sein.

Der zwischen der ersten und zweiten Stufe verlaufende Dichtring sollte aus Silikonkautschuk bestehen.

Das axiale Spiel zwischen Anschlussfittig und Anschweißstück sollte zwischen 0,2 mm und 0,5 mm liegen. Das radiale Spiel kann 0,2 mm bis 0,6 mm betragen, so dass sich ein Spalt zwischen Abschlussstück und Anschlussfittig im Bereich dessen Vorsprungs zwischen 0,1 mm und 0,3 mm ergibt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus einem der nachfolgenden Beschreibung von der Zeichnung zu entnehmenden bevorzugten Ausführungsbeispiel.

Es zeigen:
- Fig. 1: ein erfindungsgemäßer Schlauchanschluss, teilweise geschnitten und vor einer formschlüssigen Verbindung,
- Fig. 2: der Schlauchanschluss nach Fig. 1 nach formschlüssiger Verbindung und

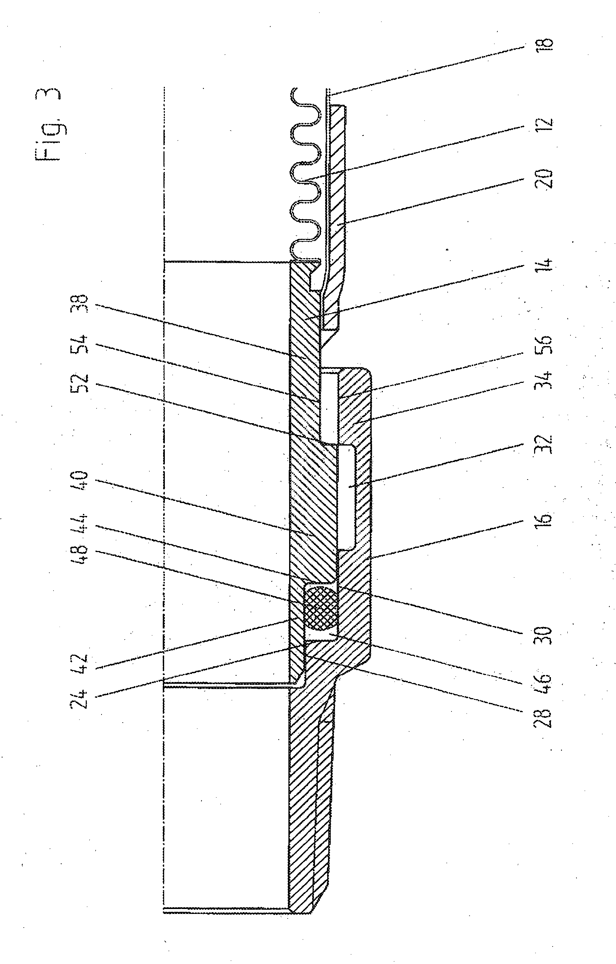

- Fig. 3: ein vergrößerter Ausschnitt der Fig. 1.

Den Fig. ist eine Verbindungsanordnung zu entnehmen, die insbesondere für Sprinklerleitungen bestimmt sind. Über die Verbindungsanordnung 10 wird im Ausführungsbeispiel ein Wellschlauch oder -rohr 12 über ein als Abschlussstück 14 zu bezeichnendes Anschweißstück mit einem als Anschlusselement 16 zu bezeichnenden Anschlussfitting verbunden, der einen Gewindeanschluss zum Anschluss an eine Versorgungsleitung oder zur Aufnahme von insbesondere einem Sprinklerkopf aufweisen kann. Das Abschlussstück 14 wird nachstehend auch als Anschweißstück 14 und das Anschlusselement 16 auch als Anschlussfitting 16 bezeichnet.

Der vorzugsweise aus Edelstahl bestehende Wellschlauch 12 ist von einer gleichfalls bevorzugterweise aus Edelstahl bestehenden Ummantelung 18 umgeben, der von einer Führungshülse 20 aufgenommen ist. Die Führungshülse 20, die aus Edelstahl bestehen kann, ist mit dem rohrseitigen Ende des Anschweißstücks 14 verschweißt. Zur Sicherung der Ummantelung 18 kann diese des Weiteren mit der Führungshülse 20 verpresst sein. Eine zusätzliche Schweißung ist gleichfalls möglich. Insoweit wird auf hinlänglich bekannte Konstruktionen verwiesen.

Damit eine Unlösbarkeit zwischen dem Anschlussfitting 16 und dem Anschweißstück 14 bei gleichzeitiger Drehbarkeit zueinander möglich ist, sind das Anschlussfitting 16 und das Anschweißstück 14 in ihren überlappenden Bereichen wie folgt ausgebildet.

Das Anschlussfitting 16 weist einen rohrförmigen Endabschnitt 22 auf, der über eine erste Stufe 24 in einen vorderen Abschnitt 26 übergeht, der als Gewindeanschluss ausgebildet sein kann.

Die erste Stufe 24 wird durch zwei radial versetzt zueinander verlaufende Bereiche oder Flächen 28, 30 gebildet, die parallel zueinander und parallel zur Längsachse des Anschlussfittings 16 verlaufen.

Beabstandet zu der ersten Stufe 24 in Richtung des rückseitigen freien Endes des Endabschnitts 22 ist eine umlaufende Innennut 32 ausgebildet, die innenseitig, also gewindeanschlussseitig, die Fläche 30 und außenseitig, also wellschlauchseitig, einen Abschnitt 34 begrenzt, der folglich die Form eines radial nach innen gerichteten Vorsprungs aufweist, der demnach auch das Bezugszeichen 34 aufweist.

Der Innendurchmesser des rohrförmigen Endabschnitts 22 entspricht dem Außendurchmesser eines ebenfalls rohrförmigen Endabschnitts 36 des Anschweißstücks 14, der sich aus einem schlauchseitigen ersten zylindrischen Abschnitt 38, einem mittleren Zylinderabschnitt 40 größeren Durchmessers und einem dritten Zylinderabschnitt 42 zusammensetzt, dessen Durchmesser dem Außendurchmesser des Anschlussfittings 16 im Bereich des an der ersten Stufe 24 angrenzenden und die Fläche 28 aufweisenden vorderen Abschnitts 26 entspricht.

Der Außendurchmesser des mittleren Zylinderabschnitts 40 ist wiederum an den Innendurchmesser des Abschnitts 22 angepasst, der die Fläche 30 aufweist und die Innennut 32 innenseitig begrenzt.

Die Zylinderabschnitte 40, 42 des Anschweißstücks 14 begrenzen eine zweite Stufe 44, wie die zeichnerischen Darstellungen verdeutlichen.

Sind das Anschweißstück 14 und der Anschlussfitting 16 zusammengesteckt, so verläuft zwischen der ersten und zweiten Stufe 24, 44 ein im Schnitt rechteckförmiger Ringraum 46, in dem eine Dichtung 48 wie O-Ring aus z. B. Silikonkautschuk angeordnet ist.

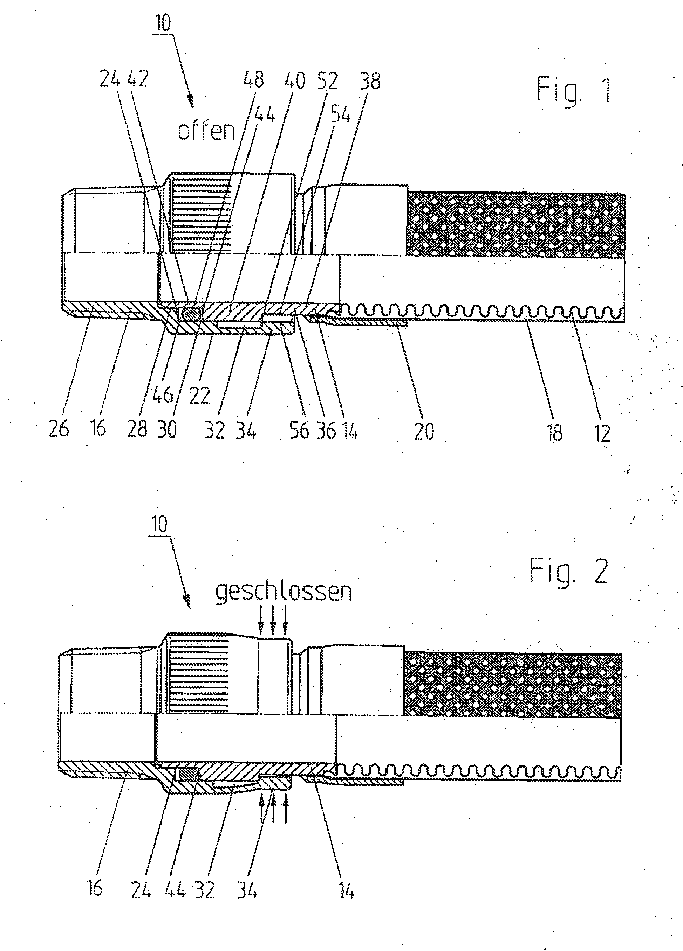

Des Weiteren erstreckt sich bei zusammengesetzten Anschweißstück 14 und Anschlussfitting 16 der den Vorsprung bildende Abschnitt 34, der innenseitig, also gewindeanschlussseitig, die Innennut 32 begrenzt, im endseitigen Bereich des mittleren Zylinderabschnitts 38 über den Zylinderabschnitt 36 des Anschweißstücks 14. Wirkt nunmehr auf den Abschnitt 34 in radialer Richtung eine Kraft, so erfolgt ein Biegen des Abschnitts 34 in Richtung des Anschweißstücks 14 derart, dass der Abschnitt 34 die zwischen den Zylinderabschnitten 38 und 40 des Anschweißstücks 14 verlaufende dritte Stufe 52 hintergreift, wie die Fig. 2 verdeutlicht. Die dritte Stufe 52 bildet daher einen Anschlag, der auch mit dem Bezugszeichen 52 gekennzeichnet sein kann.

Es erfolgt ein radiales Verpressen, um eine formschlüssige Verbindung in axialer Richtung zwischen dem Anschweißstück 14 und dem Anschlussfitting 16 herzustellen.

Da der Übergang zwischen der Innennut 32 und der Innenfläche des Abschnitts 34 des Anschlussfittings 16 und zwischen dem äußeren Zylinderabschnitt 38 und dem mittleren Zylinderabschnitt 40 des Anschweißstücks 14 quasi scharfkantig erfolgt, reicht bereits ein geringer Überlappungsbereich zwischen dem Vorsprung 34 und der Stufe 52 aus, um im erforderlichen Umfang eine gewünschte formschlüssige Verbindung in axialer Richtung sicherzustellen.

Unabhängig hiervon sollte der Abschnitt 34 in einem Umfang radial verpresst werden, dass zwischen den einander zugewandten Flächen 54, 56 der Abschnitte 34 und 38 ein Spalt verläuft, der vorzugsweise eine Höhe von 0,1 mm und 0,3 mm aufweist. Ferner sollte in radialer Richtung eine Überlappung zwischen dem Vorsprung 34 und der Stufe 52 zwischen 1,0 mm und 1,5 mm vorliegen.

Dadurch, dass im Abstand zu dem radial zu verbiegenden Abschnitt 34 und dem Bereich des Anschlussfittings 16, der im Bereich der Stufen 24, 44 verläuft, das Anschlussfitting 16 durch die Innennut 32 geschwächt ist, setzt sich die durch das radiale Verpressen erfolgende Verformung nicht in den Bereich fort, in dem die eine radiale Führung sicherstellenden und parallel zueinander verlaufenden Flächen verlaufen, die die Stufen 24, 44 begrenzen, also die parallel zueinander verlaufenden Umfangsflächen der Zylinderabschnitte 40, 42 des Anschweiß-stücks 14 und der Flächen 28, 30 der ersten Stufe 24 des Anschlussfittings 16. Somit ist weiterhin ein problemloses Verdrehen des Anschlussfittings 16 zu dem Anschweißstück 14 möglich. Ungeachtet dessen ist jedoch eine hinreichende formschlüssige Verbindung in axialer Richtung gegeben, so dass die Verbindungsanordnung 10 mit hohen Drücken von z. B. 100 bar beaufschlagt werden kann, ohne dass ein Lösen erfolgt.

Wie sich aus den Fig. 1 und 2 ergibt, weist das Anschlussfittig 16 umfangsseitig eine Rändelung auf, um ein Erfassen und Drehen zu erleichtern. Das Anschlussfittig 16 kann aber auch außenseitig z. B. eine 6-Kantform aufweisen.

Zwischen dem Anschlussfittig 16 und dem Anschweißstück 14 sollte auch ein axiales Spiel vorliegen, das bevorzugterweise zwischen 0,2 mm und 0,5 mm liegt.

## Patentansprüche

1. Verbindungsanordnung (10) zwischen einem aus Stahl bestehenden Abschlussstück (14) eines von einer Ummantelung (18) umgebenen Falten- oder Wellrohrs (12) und einem hülsenförmigen aus Stahl bestehenden Anschlusselement (16), das das Abschlussstück endseitig umgibt und mit diesem verbunden ist, wobei im Überlappungsbereich von dem Abschlussstück und dem Anschlusselement zwischen diesen eine radial umlaufende Dichtung (48), wie O-Ring, verläuft, wobei das Abschlussstück eine äußere zweite Stufe (44) aufweist, das Anschlusselement (16) einen rohrförmigen Endabschnitt (22) mit einer entgegengesetzt zu der zweiten Stufe'verlaufenden inneren ersten Stufe (24) und endseitig einen nach innen gerichteten Vorsprung (34) aufweist, der bei zusammengesetztem Abschlussstück (14) und Anschlusselement (16) zu deren axialen Sicherung mit einem von dem Abschlussstück ausgehenden Anschlag (52) wechselwirkt, wobei das Anschlusselement (16) zwischen der ersten Stufe (24) und dem Vorsprung (34) geschwächt ist,
**dadurch gekennzeichnet,**
**dass** bei zusammengesetztem Abschlussstück (14) und Anschlusselement (16) diese drehbar verbunden sind und die erste und die zweite Stufe (24, 44) einen Zwischenraum (46) begrenzen, in dem die Dichtung (48) verläuft, dass zu beiden Seiten sowohl der ersten als auch der zweiten Stufe angrenzende Bereiche (28, 30, 40, 42) parallel zueinander und parallel zur Längsachse des Abschlussstücks verlaufen und eine radiale Führung beim Drehen bilden, dass die Schwächung des Anschlusselements (16) durch eine umlaufende Innennut (32) bei gleichbleibendem Außendurchmesser des Anschlusselements (16) zwischen der ersten Stufe (24) und dem Vorsprung (34) gebildet wird, wobei das Anschlusselement zwischen der ersten Stufe und dem Vorsprung (34) derart geschwächt ist, dass bei radial auf den Vorsprung einwirkenden Kräften in Richtung der Außenfläche des Abschlussstücks und hierdurch bedingtes bleibendes Verstellen des Vorsprungs bei gleichzeitigem Hintergreifen des Anschlags eine die radiale Führung beeinflussende Verformung des Anschlusselementes unterbleibt, dass der mit dem Vorsprung (34) wechselwirkende Anschlag (52) durch eine umlaufende dritte Stufe (52) des Abschlussstücks (14) gebildet ist und sowohl die dritte Stufe (52) als auch der mit dieser wechselwirkende Bereich des Vorsprungs (34) in Längsschnitt betrachtet durch Geraden begrenzt sind, die einen rechten Winkel einschließen und unstetig oder im Wesentlichen unstetig ineinander übergehen, und dass axial verlaufende Innenfläche (56) des Vorsprungs unter Einhaltung eines Spalts zur zugewandten Außenfläche (54) des Abschlussstücks verläuft.

2. Verbindungsanordnung nach Anspruch 1,
**dadurch gekennzeichnet,**
**dass** der rohrförmige Endabschnitt (22) des Anschlusselements (16) beabstandet zu seinem freien Ende eine umlaufende Innennut (32) zur Bildung der Materialschwächung aufweist.

3. Verbindungsanordnung nach Anspruch 1 oder 2,
**dadurch gekennzeichnet,**
**dass** in Längsrichtung des Anschlusselements (16) betrachtet sich innenseitig an der Innennut (32) der die radiale Führung bildende Bereich (30) der ersten Stufe (24) angrenzt und außenseitig an der Innennut angrenzender Abschnitt (34) den nach innen gerichteten Vorsprung (34) bildet.

4. Verbindungsanordnung nach Anspruch 1,
**dadurch gekennzeichnet,**
**dass** der Spalt eine Höhe B mit 0,1 mm ≤ B ≤ 0,3 mm aufweist.

5. Verbindungsanordnung nach einem der vorhergehenden Ansprüche,
**dadurch gekennzeichnet,**
**dass** bei zusammengesetzten Abschlussstück (14) und Anschlusselement (16) sich der Vorsprung (34) und der Anschlag (52) über eine Höhe H mit 1,0 mm ≤ H ≤ 1,5 mm überlappen.

6. Verbindungsanordnung nach einem der vorhergehenden Ansprüche,
**dadurch gekennzeichnet,**
**dass** das Abschlussstück (14) und der Schlauch (12) aus Stahl, insbesondere aus Edelstahl bestehen.

7. Verbindungsanordnung nach einem der vorhergehenden Ansprüche,
**dadurch gekennzeichnet,**
**dass** die umlaufende Dichtung (48) in Form der O-Ring-Dichtung aus Silikonkautschuk besteht.

## Claims

1. Connecting arrangement (10) between a terminal piece (14), consisting of steel, of a corrugated tube (12) surrounded by a sheath (18), and a sleeve-like connecting element (16), consisting of steel, surrounding the terminal piece at the end and being connected thereto, where a radially encircling seal (48) such as an O-ring runs between the terminal piece and the connecting element in the region of their overlap, where the terminal piece has an outer second stage (44), where the connecting element (16) has a tube-like end section (22) with an inner first stage (24) opposite to the second stage and at the end an inward-facing projection (34) which interacts with a stop (52) extending from the terminal piece when the terminal piece (14) and connecting element (16) are joined together in order to secure them axially, and where the connecting element (16) is weakened between the first stage (24) and the projection (34),
**wherein**
when the terminal piece (14) and the connecting element (16) are joined together they are rotatably connected and the first and second stages (24, 44) limit an intermediate space (46) containing the seal (48), wherein adjoining regions (28, 30, 40, 42) on both sides of both the first and the second stage run parallel to one another and parallel to the longitudinal axis of the terminal piece and form a radial guide during rotation, wherein the weakening of the connecting element (16) is formed by an encircling inner groove (32) with the outer diameter of the connecting element (16) between the first stage (24) and the projection (34) remaining the same, where the connecting element between the first stage and the projection (34) is weakened such that when forces act radially on the projection in the direction of the outer surface of the terminal piece, resulting in permanent setting of the projection with simultaneous engagement behind the stop, deformation of the connecting element affecting the radial guide does not take place, wherein the stop (52) interacting with the projection (34) is formed by an encircling third stage (52) of the terminal piece (14) and both the third stage (52) and that region of the projection (34) interacting therewith when viewed in the longitudinal section are limited by straight lines forming a right angle and merging into one another discontinuously or in an essentially discontinuous manner, and wherein an axial inner surface (56) of the projection maintains a gap from the outer surface (54) of the terminal piece facing it.

2. Connecting arrangement according to claim 1,
wherein
the tube-like end section (22) of the connecting element (16) has at a distance from its free end an encircling inner groove (32) to weaken the material.

3. Connecting arrangement according to claim 1 or 2,
wherein
when viewed in the longitudinal direction of the connecting element (16), the region (30) of the first stage (24) forming the radial guide adjoins the inner groove (32) on the inside and the section (34) adjoining said inner groove forms the inward-facing projection (34) on the outside.

4. Connecting arrangement according to claim 1,
wherein
the gap has a height B of 0.1 mm ≤ B ≤ 0.3 mm.

5. Connecting arrangement according to one of the preceding claims,
wherein
when the terminal piece (14) and the connecting element (16) are joined together the projection (34) and the stop (52) overlap over a height H of 1.0 mm < H < 1.5 mm.

6. Connecting arrangement according to one of the preceding claims,
wherein
the terminal piece (14) and the tube (12) consist of steel, in particular of stainless steel.

7. Connecting arrangement according to one of the preceding claims,
wherein
the encircling seal (48) in the form of an 0-ring seal consists of silicone rubber.

## Revendications

1. Dispositif de raccordement (10) entre une pièce terminale (14) en acier, appartenant à un tuyau plissé ou ondulé (12) entouré d'une gaine (18), et un élément de raccordement (16) en acier en forme de manchon qui entoure la pièce terminale à son extrémité et est relié à celle-ci, sachant que dans la zone de chevauchement de la pièce terminale et de l'élément de raccordement s'étend radialement entre ladite pièce et ledit élément un joint (48), tel qu'un joint torique, que la pièce terminale présente un deuxième palier (44) extérieur, que l'élément de raccordement (16) présente une partie terminale (22) tubulaire avec un premier palier (24) intérieur opposé au deuxième palier, et à son extrémité un épaulement (34) orienté vers l'intérieur qui, lorsque la pièce terminale (14) et l'élément de raccordement (16) sont assemblés, interagit avec une butée (52) partant de la pièce terminale afin d'assurer leur blocage axial, l'élément de raccordement (16) étant affaibli entre le premier palier (24) et l'épaulement (34),
**caractérisé en ce**
**que** lorsque la pièce terminale (14) et l'élément de raccordement (16) sont assemblés, ils sont reliés de manière pivotante, et que le premier et le deuxième paliers (24, 44) délimitent un espace intermédiaire (46) dans lequel s'étend le joint (48), que des deux côtés tant du premier que du deuxième paliers s'étendent des zones voisines (28, 30, 40, 42) parallèles entre elles et parallèles à l'axe longitudinal de la pièce terminale, et forment un guidage radial lors de la rotation, que l'affaiblissement de l'élément de raccordement (16) est formé par une gorge intérieure (32) circonférentielle entre le premier palier (24) et l'épaulement (34), le diamètre extérieur de l'élément de raccordement (16) restant inchangé, sachant que l'élément de raccordement est affaibli entre le premier palier et l'épaulement (34) de manière telle qu'en présence de forces agissant radialement sur l'épaulement en direction de la face extérieure de la pièce terminale et le déplacement permanent ainsi provoqué de l'épaulement avec l'engagement en prise arrière simultané de la butée, une déformation de l'élément de raccordement influençant le guidage radial n'a pas lieu, que la butée (52) interagissant avec l'épaulement (34) est formée par un troisième palier (52) circonférentiel de la pièce terminale (14), et que, vus en coupe longitudinale, le troisième palier (52) ainsi que la zone de l'épaulement (34) interagissant avec ledit palier sont délimités par des droites qui inscrivent un angle droit et se fondent l'une dans l'autre de manière discontinue ou sensiblement de manière discontinue, et que la face intérieure (56) de l'épaulement s'étendant axialement s'étend en respectant un interstice devant la face extérieure (54) orientée vers elle de la pièce terminale.

2. Dispositif de raccordement selon la revendication 1,
**caractérisé en ce**
**que** la partie terminale (22) tubulaire de l'élément de raccordement (16) présente à une certaine distance de son extrémité libre une gorge intérieure (32) circonférentielle pour former l'affaiblissement de matière.

3. Dispositif de raccordement selon la revendication 1 ou 2,
**caractérisé en ce**
**que** vues dans le sens longitudinal de l'élément de raccordement (16), la zone (30) du premier palier (24) formant le guidage radial jouxte du côté intérieur la gorge intérieure (32) et la partie (34) jouxtant du côté extérieur la gorge intérieure forme l'épaulement (34) orienté vers l'intérieur.

4. Dispositif de raccordement selon la revendication 1,
**caractérisé en ce**
**que** l'interstice présente une hauteur B telle que 0,1 mm ≤ B ≤ 0,3 mm.

5. Dispositif de raccordement selon l'une des revendications précédentes,
**caractérisé en ce**
**que** lorsque la pièce terminale (14) et l'élément de raccordement (16) sont assemblés, l'épaulement (34) et la butée (52) se chevauchent sur une hauteur H telle que 1,0 mm ≤ H ≤ 1,5 mm.

6. Dispositif de raccordement selon l'une des revendications précédentes,
**caractérisé en ce**
**que** la pièce terminale (14) et le tuyau (12) sont en acier, en particulier en acier inoxydable.

7. Dispositif de raccordement selon l'une des revendications précédentes,
**caractérisé en ce**
**que** le joint (48) circonférentiel est constitué sous la forme d'un joint torique d'étanchéité en caoutchouc de silicone.
